# EUROPÄISCHE PATENTSCHRIFT

(11) **EP 1 771 708 B1**
(45) Veröffentlichungstag und Bekanntmachung des Hinweises auf die Patenterteilung: **24.04.2019**
(21) Anmeldenummer: 05767859.1
(22) Anmeldetag: 07.07.2005
(51) Int. Cl.: G01K 7/02, G01K 1/14

(54) **VORRICHTUNG ZUR POSITIONIERUNG UND FIXIERUNG VON DRÄHTEN IN ROHREN**
DEVICE FOR POSITIONING AND FIXING WIRES IN TUBES
Dispositif de positionnement et de fixation de fils métalliques dans des tubes

(30) Priorität: 23.07.2004 DE 102004035890
(43) Veröffentlichungstag der Anmeldung: 11.04.2007
(73) Patentinhaber: Evonik Degussa GmbH, 45128 Essen (DE)
(72) Erfinder: FISCHER, Achim, 63739 Aschaffenburg (DE); BURKHARDT, Werner, 63636 Brachttal (DE); HUTHMACHER, Klaus, 63571 Gelnhausen (DE)
(86) Internationale Anmeldenummer: PCT/EP2005/007322
(87) Internationale Veröffentlichungsnummer: WO 2006/010447

(56) Entgegenhaltungen:
- EP-A- 0 272 475
- GB-A- 1 378 279
- US-A- 3 022 670
- US-A- 4 753 114
- US-A1- 2003 136 196
- US-B1- 6 543 297

## Beschreibung

Die Erfindung betrifft eine Vorrichtung zur Positionierung und Fixierung von Voll- oder Hohldrähten in Rohren.

In der chemischen Reaktionstechnik ist die Positionierung und Fixierung von Drähten, insbesondere von Thermoelementen, in rohrförmigen Reaktoren von großer Bedeutung. Es soll möglich sein, die Temperatur über die gesamte Länge der Rohre an verschiedenen Stellen zu messen.

Unter den Begriff Hohldrähte fallen in diesem Zusammenhang auch Kapillaren, durch die man gasförmige oder flüssige Edukte in einer gewünschten Höhe in das Reaktionsrohr einführt. Diese Kapillaren können ebenso als Umhüllung von Thermoelementen vorgesehen sein, die man in dem Bereich zwischen den Halterungen positionieren will. Man kann die Kapillaren auch zur Probenahme während der Reaktion benutzen und die gewünschten Proben absaugen.

Dabei ist es unerwünscht, für die Positionierung die Rohrwand anbohren zu müssen, wodurch die Fertigungsaufwand insbesondere für Rohrbündelreaktoren, die mehrere tausend Rohre besitzen, ins Unpraktikable steigen würde. Derartige Zuführungen würden u.a. die Verfüllung von Katalysatorpellets nachteilig beeinflussen, so dass es zu Kanalbildungen und inhomogenen Staudruckverteilungen kommen kann.

Aufgabe der Erfindung ist es, eine Vorrichtung bereitzustellen, bei der diese Nachteile vermieden werden.

Die Erfindung betrifft eine Vorrichtung zur Positionierung und Fixierung von Voll- und Hohldrähten in Rohren (später auch Halterungen genannt), bestehend aus einem nicht geschlossenen ringförmigen Element, das einen geringeren Querschnitt als diese Rohre aufweist, dessen Wandung mindestens eine Bohrung zur Durchführung eins Drahtes aufweist, wobei die Wandung dieses Elements einen zum Rohrverlauf parallel verlaufenden durchgehenden Schlitz aufweist.

Durch Aufweiten oder Zusammendrücken kann man so den Durchmesser der Vorrichtung an den des Rohres anpassen, so dass sie eng an die Wandung anliegt.

In Abhängigkeit von den Ausmessungen der Vorrichtung enthält diese eine oder mehrere Bohrungen zur Durchführung von Drähten, wie Thermoelementen oder Kapillaren.

Deren Länge innerhalb der ringförmigen Vorrichtung und senkrecht zur Rohrrichtung entspricht bevorzugt dem halbem Durchmesser des Rohres, so dass die Temperaturmessung in dessen Mitte erfolgt.

Es sind jedoch auch andere Abmessungen möglich. Die Drähte sind bevorzugt an den Durchführungen durch Lötungen befestigt und werden an der Wandung des Rohres gegebenenfalls gebündelt an dessen Ende geführt. Sie können auch innerhalb des Rohres noch an der Wandung fixiert sein.

Im allgemeinen enthält ein Reaktorrohr mehrere dieser Halterungen in geeigneten Abständen voneinander, um z. B. das Temperaturprofil in dem Rohr zu beobachten.

Durch die erfindungsgemäße Ausführung wird die ansonsten zu beobachtende Tendenz zur Kanalbildung bei der Durchströmung von Festkörperschüttungen z. B. aus Katalysatoren reduziert, mit denen die Rohre im allgemeinen gefüllt sind.

Die Anwendung der erfindungsmäßigen Vorrichtung ist nicht auf einen bestimmten Rohrtyp oder den dafür verwendeten Werkstoff beschränkt. Geeignet sind Rohre aus handelsüblichen Stählen, wie sie zum Beispiel im chemischen Anlagenbau Verwendung finden, die einen Rohrinnendurchmesser von 10 bis zu 75 mm haben. Besonders geeignet sind Rohre mit einem Rohrinnendurchmesser von 15 bis zu 50 mm. Insbesondere geeignet sind Rohre mit einem Rohrinnendurchmesser von 15 bis zu 30 mm.

Das Material für die erfindungsmäßigen Vorrichtungen ist auch nicht auf einen bestimmten Drahttyp oder Werkstoff beschränkt. Geeignet sind alle handelsüblichen Drähte, insbesondere geeignet sind Drähte, die beispielsweise in bekannter Weise als Thermoelemente zur Messung von Temperaturen eingesetzt werden. Der Durchmesser dieser Voll- oder Hohldrähte kann bis zu 3 mm betragen. Besonders geeignet sind Drähte mit einem Durchmesser von bis zu 2 mm.

Die Länge der Drähte ist nicht limitiert und wird an die Länge der Rohre angepasst. Besonders eignen sich Drähte mit einer Länge bis zu 20 m.

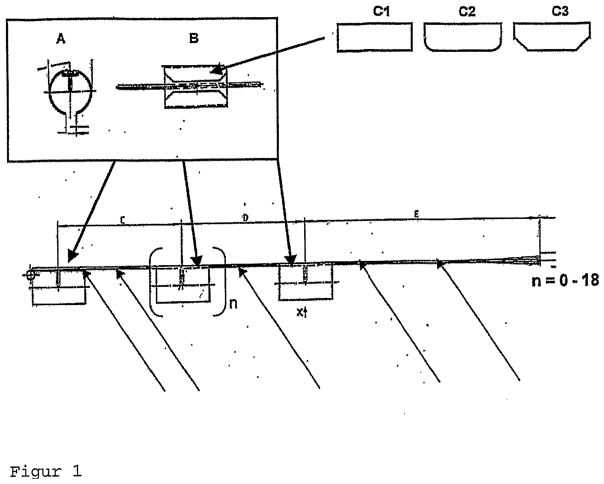

Es können bis zu 20 Drähte aus einem Rohr geführt werden (Abbildung 1; n=18). Zweckmäßig ist es jedoch bis zu 12 Drähte (n=10), besonders bevorzugt ist es, bis zu 6 Drähte (n=4) aus dem Rohr abzuführen.

Die Befestigungsvorrichtung hat bevorzugt die Form eines nicht geschlossenen ringförmig gebogenen Rechtecks, dessen Ecken bevorzugt abgerundet oder abgeschrägt sind.

Der Abstand zwischen den dabei aufeinander zeigenden Seiten des Rechtecks beläuft sich auf 1 bis 10 mm, insbesondere 3 bis 8 mm, abhängig von dem Durchmesser des Rohres.

Die Höhe des Rechtecks beläuft sich im allgemeinen auf 15 bis 80 mm, insbesondere 20 bis 40 mm, abhängig von dem Durchmesser des Rohres.

Die erfindungsgemäße Vorrichtungen werden bevorzugt über Drahtzüge in das Rohr eingezogen, der Zugdraht anschließend ausgeklinkt und aus dem Rohr entfernt. Die Vorrichtungen verschieben sich aufgrund der Klemmwirkung an der Rohrwand nicht mehr ohne Krafteinwirkung.

Die Vorrichtung ist besonders geeignet für Festbettreaktoren, in denen Flüssig- oder Gasphasenreaktionen durchgeführt werden.

Beschreibung der Figur
Abbildung 1:
   - A:: Querschnitt des Rohrs (Richtung Y-Z)
   - B:: Längsschnitt des Rohrs (Richtung X)
   - C1 bis C3:: Ausführungsformen der Positionierungselemente
   - n:: Zahl der eingeführten Drähte

## Patentansprüche

1. Verwendung von Vorrichtungen, zur Positionierung und Fixierung eines Thermoelements in einem röhrenförmigen Reaktor, wobei die Vorrichtung aus einem nicht geschlossenen ringförmigen Element besteht, das einen geringeren Querschnitt als dieses Rohr aufweist, dessen Wandung mindestens eine Bohrung zur Durchführung des Thermoelements aufweist, wobei die Wandung dieses Elements einen parallel zum Rohrverlauf verlaufenden durchgehenden Schlitz aufweist.

2. Verwendung gemäß Anspruch 1, wobei das Thermoelement senkrecht zur Rohrrichtung bis zur Rohrmitte durch die Bohrung geführt wird.

3. Verwendung gemäß Anspruch 1, wobei die Vorrichtung die Form eines nicht geschlossenen ringförmig gebogenen Rechtecks besitzt, dessen Ecken abgerundet oder abgeschrägt sind.

4. Verwendung von Vorrichtungen, zur Positionierung einer Kapillare in einem rohrförmigen Reaktor, wobei die Vorrichtung aus einem nicht geschlossenen ringförmigen Element besteht, das einen geringeren Querschnitt als dieses Rohr aufweist, dessen Wandung mindestens eine Bohrung zur Durchführung der Kapillare aufweist, wobei die Wandung dieses Elements einen parallel zum Rohrverlauf verlaufenden durchgehenden Schlitz aufweist.

5. Verwendung gemäß Anspruch 4, wobei die Kapillare senkrecht zur Rohrrichtung bis zur Rohrmitte durch die Bohrung geführt wird.

6. Verwendung gemäß Anspruch 4, wobei die Vorrichtung die Form eines nicht geschlossenen ringförmig gebogenen Rechtecks besitzt, dessen Ecken abgerundet oder abgeschrägt sind.

7. Verwendung gemäß Anspruch 4 oder 5, wobei die Kapillare die Umhüllung eines Thermoelements ist.

## Claims

1. Use of devices for positioning and fixing a thermocouple in a tubular reactor, the device consisting of a non-closed annular element, which has a smaller cross section than this tube, the wall of which has at least one bore for leading the thermocouple through, the wall of this element having a continuous slot running parallel to the run of the tube.

2. Use according to Claim 1, the thermocouple being led through the bore perpendicularly to the direction of the tube to the middle of the tube.

3. Use according to Claim 1, the device having the form of a non-closed annularly bent rectangle, the corners of which are rounded or bevelled.

4. Use of devices for positioning a capillary in a tubular reactor, the device consisting of a non-closed annular element, which has a smaller cross section than this tube, the wall of which has at least one bore for leading the capillary through, the wall of this element having a continuous slot running parallel to the run of the tube.

5. Use according to Claim 4, the capillary being led through the bore perpendicularly to the direction of the tube to the middle of the tube.

6. Use according to Claim 4, the device having the form of a non-closed annularly bent rectangle, the corners of which are rounded or bevelled.

7. Use according to Claim 4 or 5, the capillary being the casing of a thermocouple.

## Revendications

1. Utilisation de dispositifs pour positionner et fixer un thermo-élément dans un réacteur tubulaire, dans laquelle le dispositif se compose d'un élément annulaire non fermé, qui présente une section transversale plus petite que ce tube, dont la paroi présente au moins un perçage pour le passage du thermo-élément, dans lequel la paroi de cet élément présente une fente continue s'étendant parallèlement au tracé du tube.

2. Utilisation selon la revendication 1, dans laquelle le thermo-élément est guidé à travers le perçage jusqu'au milieu du tube perpendiculairement à la direction du tube.

3. Utilisation selon la revendication 1, dans laquelle le dispositif a la forme d'un rectangle cintré en forme d'anneau non fermé, dont les angles sont arrondis ou chanfreinés.

4. Utilisation de dispositifs pour positionner un capillaire dans un réacteur tubulaire, dans laquelle le dispositif se compose d'un élément annulaire non fermé, qui présente une section transversale plus petite que ce tube, dont la paroi présente au moins un perçage pour le passage du capillaire, dans laquelle la paroi de cet élément présente une fente continue s'étendant parallèlement au tracé du tube.

5. Utilisation selon la revendication 4, dans laquelle le capillaire est guidé à travers le perçage jusqu'au milieu du tube perpendiculairement à la direction du tube.

6. Utilisation selon la revendication 4, dans laquelle le dispositif a la forme d'un rectangle cintré en forme d'anneau non fermé, dont les angles sont arrondis ou chanfreinés.

7. Utilisation selon la revendication 4 ou 5, dans laquelle le capillaire est la gaine d'un thermo-élément.
